# FASCICULE DE BREVET EUROPEEN

(11) **EP 2 351 340 B1**
(45) Date de publication et mention de la délivrance du brevet: **26.12.2012**
(21) Numéro de dépôt: 09748402.6
(22) Date de dépôt: 17.09.2009
(51) Int. Cl.: H04M 1/2755, H04M 7/00

(54) **PROCEDE DE COMMUNICATION UTILISANT UNE IMAGE NUMERIQUE ET PROCEDE DE TRANSMISSION DE DONNEES**
EIN DIGITALBILD VERWENDENDES KOMMUNIKATIONSVERFAHREN UND DATENÜBERTRAGUNGSVERFAHREN
COMMUNICATION METHOD USING A DIGITAL IMAGE, AND DATA TRANSMISSION METHOD

(30) Priorité: 19.09.2008 FR 0856330
(43) Date de publication de la demande: 03.08.2011
(73) Titulaire: France Télécom, 75015 Paris (FR)
(72) Inventeur: LE HUEROU, Emmanuel, F-22700 Saint Quay Perros (FR); DALOZ, Claude, F-22300 Lannion (FR)
(86) Numéro de dépôt international: PCT/FR2009/051746
(87) Numéro de publication internationale: WO 2010/031964

(56) Documents cités:
- WO-A-2007/049101
- WO-A-2008/098128
- GB-A- 2 407 678
- US-A1- 2005 143 126

## Description

La présente invention se rapporte de manière générale au domaine des télécommunications, et plus précisément à un procédé de communication incluant une étape de chargement d'une image numérique dans un premier terminal, cette image permettant d'établir une session de données entre ce premier terminal et un deuxième terminal, ou d'envoyer un message à ce deuxième terminal, selon un procédé de transmission de données.

Plusieurs techniques permettent actuellement à un utilisateur d'un premier terminal d'établir une session de données avec un deuxième terminal ou d'envoyer un message vers ce deuxième terminal sans qu'il soit nécessaire pour cet utilisateur d'entrer lui-même dans le premier terminal une adresse de communication du deuxième terminal, telle qu'un numéro de téléphone ou une adresse électronique par exemple.

Il est à noter que dans cette demande, une adresse de communication est à comprendre comme une adresse permettant à l'utilisateur de communiquer avec un contact sur un terminal distant. Il s'agit donc par exemple d'un numéro de téléphone, d'une adresse SIP (d'après l'anglais Session Initiation Protocol"), ou encore d'une adresse de courrier électronique du contact.

Notamment parmi les techniques mentionnées plus haut, les carnets d'adresses électroniques mémorisent pour les utilisateurs de terminaux de telles adresses de communication. Ainsi par simple navigation dans le carnet d'adresses électronique de son terminal, un utilisateur est en mesure d'initier un appel ou d'envoyer un message sans avoir à entrer une adresse de communication de son correspondant sur son terminal. Cependant l'utilisation d'un carnet d'adresses électronique nécessite au préalable son remplissage par l'utilisateur, ce qui est fastidieux et suppose que celui-ci connaît les adresses de communication des personnes avec qui il souhaite communiquer. Or cela n'est généralement pas le cas lorsque l'utilisateur souhaite appeler un prestataire de services par exemple.

Les techniques dites de "click-to-call" s'affranchissent de ce problème en permettant à un utilisateur d'appeler un correspondant par la simple activation d'un lien sur une page web affichée sur son terminal. Cette activation déclenche une requête d'établissement d'appel entre le terminal de l'utilisateur et le correspondant, traitée soit par le terminal de l'utilisateur soit par un réseau de communication auquel est connecté le terminal. Dans ces techniques, une adresse de communication du correspondant est contenue dans le lien activé par l'utilisateur, et est donc utilisée par celui-ci au gré de sa navigation sur le réseau Internet, sans remplissage préalable d'un carnet d'adresses. De plus cette adresse de communication est généralement masquée à l'utilisateur, le lien activé par celui-ci étant souvent une icône ou un texte générique tel que "appeler notre correspondant". Ces techniques de "Click-to-call" sont cependant plus adaptées aux professionnels ayant des sites marchands sur Internet qu'aux contacts personnels de l'utilisateur.

La demande de brevet W02005067271 propose un terminal intégrant une fonction de "click-to-call" plus conviviale: ce terminal équipé d'un appareil photographique, permet à l'utilisateur de photographier une image intégrant des métadonnées sur le sujet de cette image, et d'interpréter ensuite ces métadonnées, qui incluent par exemple un numéro de téléphone associé au sujet de l'image. Par un simple clic sur cette image, le terminal est alors en mesure d'initier un appel ou d'envoyer un message vers le sujet de l'image. Ainsi l'utilisateur est en mesure de se constituer un carnet d'adresses sous forme de photographies de contacts permettant d'initier des appels ou d'envoyer des messages vers ces contacts. Cette mémorisation conviviale des adresses de communication sous forme de métadonnées nécessite cependant une interprétation et un traitement de ces métadonnées dans le terminal de l'utilisateur, notamment pour initier un appel ou envoyer un message vers un contact, ce qui est complexe et coûteux au niveau du terminal. De plus ce procédé de mémorisation nécessite de photographier et de mémoriser une photographie par contact, ce qui est coûteux en place mémoire, et rend le carnet d'adresses photographique en résultant long à parcourir. Enfin dans ce procédé, le terminal utilise une adresse de communication d'un contact pour l'appeler ou lui envoyer un message, cette adresse de communication étant comprise dans les métadonnées de la photographie associée au contact, ou dans un répertoire téléphonique distant. Il n'est donc pas possible pour ce contact de garder son ou ses adresses de communication confidentielles, ou de changer d'adresse de communication sans devoir en informer l'utilisateur.

La présente invention propose une solution qui ne présente pas les inconvénients précités, en fournissant un procédé de communication incluant une étape de chargement d'une image numérique et un procédé de transmission de données, qui permettent d'établir une session de données avec un contact ou de lui envoyer un message, ce contact étant associé à au moins une partie de cette image numérique.

A cette fin, l'invention propose un procédé de communication incluant une étape de chargement d'une image dans un terminal, procédé caractérisé en ce qu'il comporte au moins :
- une étape d'activation d'une zone active incluse dans ladite image,
- une étape de transmission d'un message d'activation déclenchant une transmission de données vers un équipement défini par une adresse de communication déterminée de manière distante après interprétation par un serveur distant de métadonnées propres à ladite image et associées à ladite zone active.
Le chargement de l'image dans le terminal correspond ici à un chargement dans une mémoire cache ou une mémoire RAM (d'après l'anglais "Random Access Memory") depuis un espace de stockage situé dans le terminal, ou à un téléchargement depuis un espace de stockage distant.

Le procédé de communication selon l'invention permet à un utilisateur d'un terminal de télécharger une image numérique comportant une ou plusieurs zones actives, associées chacune à un contact. Une zone active est à comprendre comme une portion de l'image sur laquelle une action de l'utilisateur, comme par exemple un clic de souris, fait exécuter une portion de code par un logiciel de lecture inclus dans le terminal. Ce logiciel de lecture dans le terminal de l'utilisateur est peu complexe à mettre en oeuvre et rapide par rapport à celui utilisé dans la demande W02005067271, car il n'interprète pas les métadonnées associées aux zones actives de l'image numérique, ces métadonnées étant interprétées par un serveur distant. De plus ce logiciel n'est pas spécifique au langage utilisé pour définir ces métadonnées, puisque ces métadonnées ne sont pas interprétées par le terminal mais par le serveur distant.

En outre, grâce à l'invention, l'utilisateur est en mesure de contacter des personnes sans que celles-ci lui communiquent leurs adresses de communication, dès qu'elles mettent à sa disposition une image numérique comportant une zone active les représentant sur un site distant accessible à l'utilisateur. L'invention permet donc notamment, à partir d'une photographie de classe par exemple sur un site communautaire, d'appeler de façon rapide un ancien contact sans que celui-ci ne rende ses adresses de communication publiques. En outre la gestion des adresses de communication s'effectuant de manière distante, elle est plus flexible que dans l'art antérieur puisqu'une telle adresse est par exemple modifiable par un contact sans incidence pour l'utilisateur du procédé de communication selon l'invention.

Selon une caractéristique avantageuse du procédé de communication selon l'invention, ladite étape d'activation est précédée d'une étape d'affichage d'informations associées à ladite zone active.

Ces informations sont par exemple l'identité du contact associé à la zone active, l'historique des appels de l'utilisateur concernant ce contact, ou des informations tirées du carnet d'adresses de l'utilisateur. Elles sont obtenues par le serveur distant ou par le terminal grâce à l'interprétation précédemment effectuée par le serveur distant, des métadonnées associées à la zone active.

Avantageusement, lesdites informations comportent un choix d'activations possibles de ladite zone active, ledit choix comportant une activation provoquant un envoi de message par ledit serveur distant et une activation provoquant un établissement de session de communication par ledit serveur distant.

L'utilisation du serveur distant pour établir un appel ou pour envoyer un message à un contact associé à la zone active de l'image numérique, permet de ne pas envoyer d'adresse de communication de ce contact au terminal de l'utilisateur, ce qui garantit la confidentialité de cette adresse, puisque celle-ci n'est utilisée qu'au sein du réseau de communication auquel est connecté le terminal.

L'invention concerne aussi un procédé de transmission de données entre un premier terminal et un deuxième terminal dans un réseau de communication, caractérisé en ce qu'il comprend des étapes de:
- réception d'un message d'activation d'une zone active d'une image numérique, ledit message étant envoyé par ledit premier terminal,
- obtention d'une adresse de communication associée à ladite zone active,
- établissement d'une session de communication entre ledit premier terminal et ledit deuxième terminal, ou envoi d'un message audit deuxième terminal, en utilisant ladite adresse de communication.

Ce procédé de transmission de données selon l'invention est mis en oeuvre dans le serveur distant, lorsque celui-ci se charge d'établir une session de données ou d'envoyer un message à un contact associé à une zone active de l'image venant d'être activée par l'utilisateur.

L'invention concerne encore un terminal comportant des moyens de chargement d'une image numérique, caractérisé en ce qu'il comporte en outre:
- des moyens de visualisation d'une zone active de ladite image numérique,
- des moyens d'activation de ladite zone active suite à une action d'un utilisateur,
- des moyens de transmission d'un message d'activation à un serveur distant comportant des moyens d'interprétation de métadonnées de ladite image associées à ladite zone active et des moyens d'obtention d'une adresse de communication à partir de métadonnées ainsi interprétées.

L'invention concerne enfin un programme d'ordinateur comportant des instructions pour mettre en oeuvre le procédé de communication selon l'invention, lorsqu'il est exécuté sur un processeur.

Le procédé de transmission de données, le terminal et le programme d'ordinateur selon l'invention présentent des avantages analogues à ceux du procédé de communication selon l'invention.

D'autres caractéristiques et avantages apparaîtront à la lecture d'un mode de réalisation préféré décrit en référence aux figures dans lesquelles :
- la figure 1 représente un système de communication mettant en oeuvre le procédé de communication et le procédé de transmission de données selon l'invention dans ce mode de réalisation de l'invention,
- la figure 2 représente des étapes de création de métadonnées dans une image numérique,
- la figure 3 représente un exemple d'utilisation du procédé de communication et du procédé de transmission de données selon l'invention,
- la figure 4 représente des étapes du procédé de communication selon l'invention dans ce mode de réalisation de l'invention,
- et la figure 5 représente des étapes du procédé de transmission de données selon l'invention dans ce mode de réalisation de l'invention.

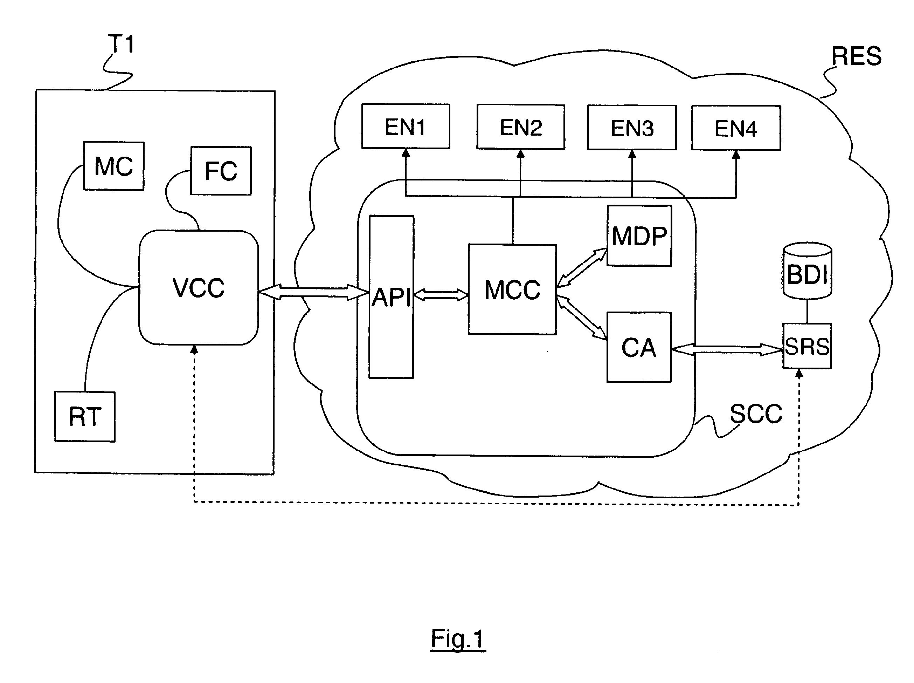

Selon un mode préféré de réalisation de l'invention représenté à la **figure 1****,** le procédé de communication incluant une étape de chargement d'une image numérique selon l'invention est implémenté dans un terminal T1. Le terminal T1 est par exemple un terminal mobile, un assistant numérique personnel de type PDA (d'après l'anglais "Personal Digital Assistant") ou encore un ordinateur fixe, connecté à un réseau de communication RES par une liaison radio s'il s'agit d'un terminal mobile, ou par liaison filaire sinon. Le réseau RES est dans cet exemple de réalisation de l'invention un réseau de données de type Internet, couplé à un réseau téléphonique de type RTC (Réseau Téléphonique Commuté), mobile ou VolP (d'après l'anglais "Voice over Internet Protocol"), mais il est également envisageable pour le terminal T1 d'utiliser l'invention en étant connecté à un autre type de réseau, par exemple un réseau domestique.

Le terminal T1 comporte un module logiciel VCC de lecture d'images numériques, un fichier de configuration FC du module logiciel VCC, une mémoire cache MC, et un carnet d'adresses RT. Le module logiciel VCC de lecture d'images numériques communique par une interface de programmation API avec un serveur distant SCC dans le réseau RES.

Le serveur distant SCC comporte un module logiciel MCC de gestion de messages en provenance de l'interface de programmation API, et communique avec un module logiciel MDP d'interprétation de métadonnées d'images numériques. Ces images numériques comportant des métadonnées sont accessibles par le module de gestion MCC par l'intermédiaire d'un module CA de téléchargement de contenus, connecté à différentes sources de contenus dont un serveur SRS hébergeant un site de réseau social. Ce serveur SRS est interfacé à une base BDI d'images numériques comportant des métadonnées. Ces images représentent par exemple des photographies de classe, ou appartiennent à des blogs ou des albums photographiques d'une communauté de personnes.

Les fichiers comportant les données de ces images numériques comportent des champs prévus pour y insérer des métadonnées, tels que des champs XMP (d'après l'anglais "eXtensible Metadata Platform") ou des champs EXIF (d'après l'anglais "eXchangeable Image File") dans des images au format JPEG (d'après l'anglais "Joint Photographic Experts Group") ou à d'autres formats comme par exemple les formats TIFF (d'après l'anglais "Tagged Image File Format") ou GIF (d'après l'anglais "Graphics Interchange Format").

Pour une image numérique donnée de la base d'images BDI, des métadonnées sont incluses dans ces champs et définissent une ou plusieurs zones actives de l'image correspondant chacune à un contact. Ces zones actives sont centrées par exemple sur les visages de personnes présentes sur l'image, ou sur un objet représentant un service dans cette image, tel qu'un immeuble administratif, une aide en ligne, un magasin ou un service vocal. Les métadonnées insérées dans cette image numérique comprennent également pour chaque zone active ainsi définie, au moins un identifiant du contact correspondant à cette zone. Cet identifiant est par exemple un nom, un pseudo ou une adresse de communication. D'autres informations associées à ce contact sont bien entendu également insérables dans ces métadonnées, telles qu'une adresse géographique, une fonction professionnelle, un nom de société, etc. Ainsi des métadonnées associées à une zone sont par exemple définies comme suit au format XMP:
<zone> rect 50, 100, 90, 150 </zone>
<contact>alain durant</contact>
Dans cet exemple la zone est définie par un rectangle, et l'identifiant du contact associé à cette zone est le nom de ce contact. D'autres formes géométriques sont bien entendu utilisables pour définir une zone, comme par exemple un tracé résultant d'une détection de contours.

Il est à noter que bien que dans ce mode de réalisation, les métadonnées associées aux zones actives d'une image sont insérées dans cette image, des variantes de réalisation sont possibles dans lesquelles ces métadonnées associées aux zones actives sont stockées ailleurs que dans l'image elle-même. Ainsi si l'invention est utilisée sur les images successives d'une vidéo, les métadonnées associées aux zones actives de ces images sont par exemple codées dans un flux de données entrelacé au flux de données codant les images de cette vidéo. De plus, une même zone active étant potentiellement persistante sur plusieurs images de la vidéo, les métadonnées associées à cette zone active comprennent éventuellement des paramètres temporels supplémentaires, tels qu'une date de début d'apparition de la zone et une date de durée de cette zone dans la vidéo, afin de condenser les métadonnées associées aux zones actives des images de la vidéo.

Il est en outre à noter qu'en variante d'autres méthodes d'insertion des métadonnées associées à des zones actives dans une image numérique de la base d'images BDI sont utilisables, telles que des procédés de stéganographie ou de tatouage numérique.

Enfin le module de gestion MCC du serveur distant SCC comporte également une interface avec différentes entités de service du réseau RES:
- une base de données EN1 de carnets d'adresses en ligne d'utilisateurs du réseau RES,
- un serveur d'authentification EN2 des utilisateurs du réseau RES,
- un serveur EN3 de contrôle d'appel,
- et un serveur de messagerie EN4.

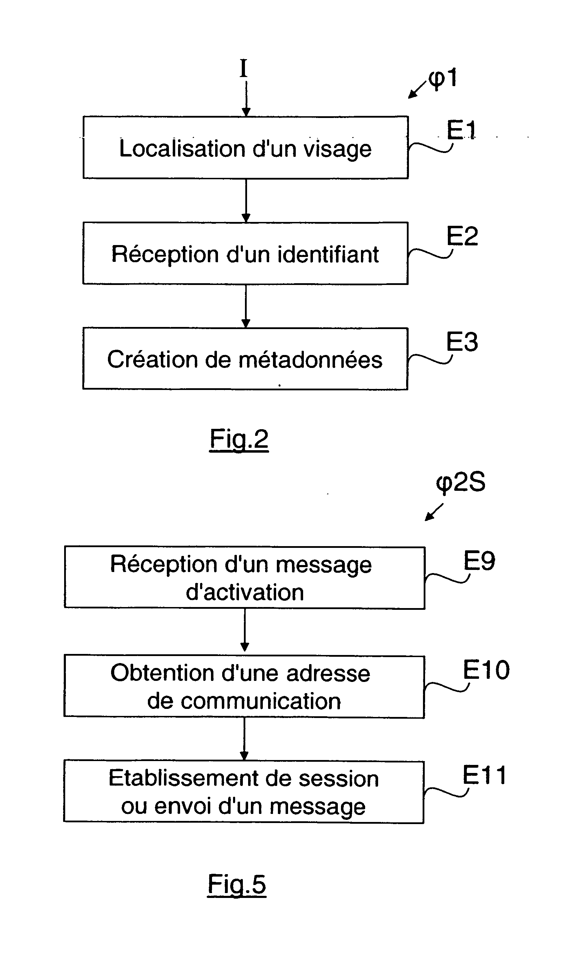

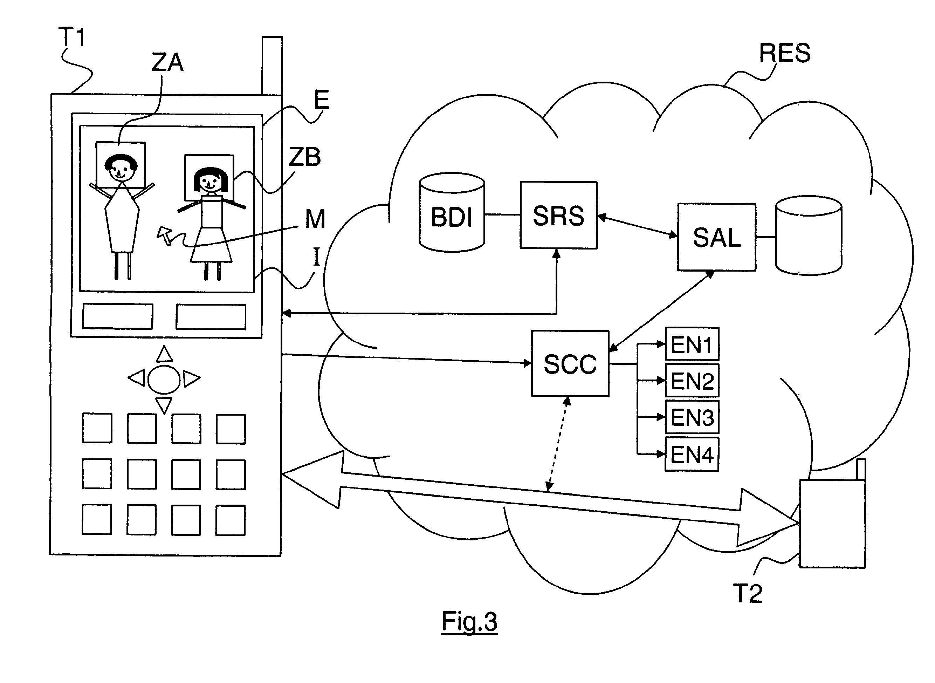

En référence à la **figure 2****,** des étapes de création de métadonnées d'une image numérique I de la base d'images BDI sont maintenant décrites. La création de ces métadonnées a lieu lors d'une phase ϕ1 de création de la base d'images BDI, préalable à leur utilisation par le procédé de communication et le procédé de transmission selon l'invention, qui ont lieu respectivement lors de phases ultérieures ϕ2T et ϕ2S. De plus on suppose, dans cet exemple de réalisation l'invention, que l'on distingue nettement sur cette image numérique I deux personnes et leurs visages, comme représenté à la **figure 3****.**

L'étape E1 est la localisation des visages présents dans l'image I. Cette étape est par exemple réalisée par le serveur SRS, auquel un membre du réseau social géré par ce serveur a envoyé l'image I. Cette localisation est effectuée manuellement par ce membre du réseau social via une interface utilisateur du serveur SRS, ou automatiquement par un procédé de localisation logiciel, tel que par exemple le procédé de localisation décrit dans l'article de C. Garcia et M. Delakis, intitulé "Convolutional Face Finder: a Neural Architecture for Fast and Robust Face Detection" et publié dans le magazine IEEE "Transactions on Pattern Analysis and Machine Intelligence" en novembre 2004. Cette étape permet de définir deux zones actives ZA et ZB sur l'image numérique I, englobant chacune un visage d'une des personnes visibles sur cette image.

L'étape E2 est la réception par le serveur SRS d'un identifiant pour chacune des zones actives définies à l'étape E1. Cet identifiant identifie la personne dont le visage est représenté sur la zone active considérée. Cet identifiant est soit fourni par le membre du réseau social ayant envoyé l'image I, grâce par exemple à la présentation par le serveur SRS d'une interface utilisateur à ce membre du réseau social, soit obtenu par le serveur SRS en utilisant un procédé de reconnaissance de visage. Cette dernière option nécessite la constitution préalable par le serveur SRS d'une base de données de visages, en utilisant par exemple les images numériques précédemment fournies par les membres du réseau social géré par le serveur SRS, et un procédé logiciel de reconnaissance de visage. Un exemple d'un tel procédé est donné dans l'article de M. Turk et A. Pentland, intitulé "Eigenfaces for Recognition" et publié dans le journal "Journal of Cognitive Neuroscience" en 1991.

Enfin l'étape E3 est la création de métadonnées associées aux zones actives ZA et ZB, et l'insertion de ces métadonnées dans le fichier de données de l'image I. Ces métadonnées comportent comme évoqué plus haut, pour chacune des zones ZA et ZB, une description géométrique de la zone considérée et l'identifiant du contact correspondant, obtenu à l'étape E2. D'autres informations sont éventuellement insérées dans ces métadonnées, telles que des adresses de communication ou des données de profil des contacts associés à ces zones. Ces informations sont par exemple récupérées par le serveur SRS à l'aide des identifiants obtenus à l'étape E2, dans une base de données de profils des membres du réseau social géré par lui. Le serveur SRS enregistre ensuite l'image I comportant les métadonnées ainsi créées, dans la base BDI d'images numériques.

Il est à noter que cet exemple de création de métadonnées d'une image de la base d'images BDI est illustratif et que d'autres modes de création de telles métadonnées sont envisageables, avant leur utilisation par le procédé de communication et le procédé de transmission de données selon l'invention. Ainsi dans un autre exemple de création de métadonnées, les métadonnées de l'image I sont créées par le serveur distant SCC, puis stockées par exemple dans le serveur SCC, l'image I étant transmise par l'utilisateur du terminal T1 au serveur distant SCC. L'image I correspond par exemple à une photographie prise par le terminal T1, qui intègre un procédé de localisation automatique de visages. Dans ce cas, l'utilisateur du terminal T1 valide les zones actives de l'image I détectées automatiquement par le terminal T1, et leur attribue à chacune un identifiant de contact. Le terminal T1 utilise alors l'interface de programmation API pour transmettre les données de description des zones actives et leurs identifiants au serveur distant SCC, qui se charge ensuite de créer les métadonnées correspondantes, et de les insérer dans l'image I, qui est ensuite sauvegardée dans la base d'images BDI.

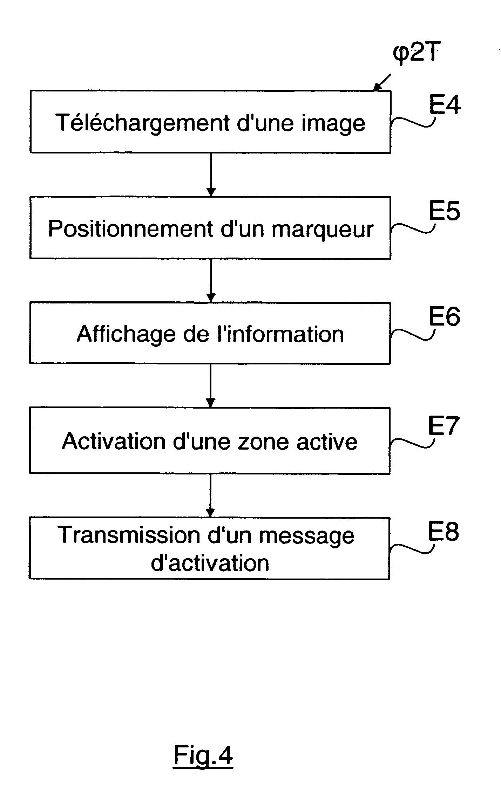

Le procédé de communication utilisant une image numérique selon l'invention est maintenant décrit sous la forme d'un algorithme comportant les étapes E4 à E9 représentées à la **figure 4****.**

L'étape E4 est le téléchargement de l'image numérique I par l'utilisateur du terminal T1, en utilisant l'interface de programmation API du serveur distant SCC. Dans ce mode de réalisation de l'invention, on suppose que l'utilisateur du terminal T1 s'est préalablement authentifié auprès du serveur distant SCC, qui utilise pour cela le serveur d'authentification EN2. L'interface de programmation API comporte en effet plusieurs fonctions encore appelées méthodes, permettant notamment au terminal T1 :
- de transmettre au serveur SCC des images numériques,
- de donner des titres aux images ainsi transmises,
- de définir des zones actives sur ces images,
- d'authentifier l'utilisateur auprès du serveur SCC
- de naviguer dans un ensemble d'images de la base d'images BDI, par exemple un album photographique de l'utilisateur ou un ensemble d'images du réseau social géré par le serveur SRS et auquel l'utilisateur a le droit d'accéder,
- et d'envoyer un message d'activation au module de gestion MCC, un message d'activation étant une notification par le terminal T1 au module de gestion MCC de l'activation par l'utilisateur d'une zone active d'une image.

Dans cette étape E4, le téléchargement de l'image I s'effectue par exemple en deux temps, d'abord par l'appel d'une méthode "getMediaList("mon_album")" donnant les titres de toutes les images d'un album photographique de l'utilisateur, ces images étant conservées dans la base d'images BDI. Puis, après sélection d'un titre par l'utilisateur sur son terminal T1, celui-ci appelle la méthode "getMedia("titre")" pour télécharger l'image I. En variante l'étape E4 correspond non pas à un téléchargement de l'image I mais à un chargement en mémoire d'une image I pour laquelle l'utilisateur a précédemment créé et enregistré des zones actives dans le serveur SCC.

A l'appel de cette méthode "getMedia("titre")" par le terminal T1, le module de gestion MCC dans le serveur distant SCC télécharge l'image I depuis la base d'images BDI par l'intermédiaire du module CA de téléchargement de contenus qui interroge pour cela le serveur SRS. Une fois l'image I téléchargée par le module de gestion MCC, celui-ci la soumet au module MDP d'interprétation de métadonnées. Le module MDP interprète les métadonnées de l'image I et transmet au module de gestion MCC les métadonnées associées à chacune des zones de l'image I sous un format facilement utilisable par le module de gestion MCC, par exemple sous forme d'un fichier XML (d'après l'anglais "eXtensible Markup Language") ou d'une liste de structures, chaque structure contenant les données associées à une zone de l'image I. Ces métadonnées interprétées sont sauvegardées dans une mémoire cache du serveur SCC, accessible par le module de gestion MCC, ce qui permet à celui-ci de les réutiliser plus rapidement si nécessaire, par exemple lors d'un nouveau téléchargement de l'image I par un autre terminal. Le module de gestion MCC construit ensuite une page HTML (d'après l'anglais "Hyper Text Markup Langage") dans laquelle est insérée l'image I et des portions de code écrites en langage de script codant différentes actions à exécuter par le module de lecture VCC du terminal T1. Ces actions sont:
- sur positionnement d'un marqueur sur une zone active de l'image I, l'affichage du contour de la zone active, ainsi que d'une bulle contenant un identifiant du contact associé à la zone active et deux liens actifs, l'un pour envoyer un message à ce contact et l'autre pour appeler ce contact,
- sur activation du lien pour envoyer un message au contact, affichage d'un champ d'insertion de texte permettant à l'utilisateur d'entrer un texte à envoyer, et d'un bouton d'action pour envoyer ce texte dans un message d'activation au serveur distant SCC via l'interface de programmation API,
- sur activation du lien pour appeler le contact de la zone active, envoi d'un message d'activation au serveur distant SCC via l'interface de programmation API.

Le module de gestion MCC choisit les informations à afficher à l'utilisateur et donc insérées dans le code source de cette page HTML, en fonction des informations disponibles sur les contacts associés aux zones actives de l'image I, et en fonction des préférences de ces contacts. Ces informations sur les contacts sont fournies par le module MDP d'interprétation de métadonnées, mais aussi éventuellement par:
- la base EN1 de carnets d'adresses en ligne, qui contient le carnet d'adresses en ligne de l'utilisateur, ce carnet d'adresses sauvegardant des informations sur certains contacts de l'utilisateur, telles que des adresses de communication, des pseudonymes ou des mémos par exemple,
- le serveur SRS, qui comporte des informations sur les contacts membres du réseau social géré par lui.
Les préférences des contacts sont contenues dans le serveur SRS, et précisent par exemple si un contact souhaite divulguer ou non ses adresses de communication, et s'il préfère être joint par message court, par un appel téléphonique ou par courrier électronique. Il est à noter que dans cet exemple de réalisation de l'invention, on suppose que l'ensemble des données accessibles par le module de gestion MCC comportant les métadonnées interprétées par le module MDP, la base EN1 de carnets d'adresses en ligne et les données du serveur SRS, permettent au module de gestion MCC de déterminer au moins une adresse de communication pour chaque contact associé à une zone active de l'image I.

A la fin de l'étape E4, la page HTML ainsi construite par le module de gestion MCC est envoyée au terminal T1, qui la stocke dans la mémoire cache MC et utilise le module de lecture VCC pour l'afficher sur un écran E à destination de l'utilisateur. Cette sauvegarde en mémoire cache permet au terminal T1 d'afficher directement cette page HTML lors d'une nouvelle requête de téléchargement de l'image I par l'utilisateur, sans retransmission de cette page par le serveur SCC au terminal T1. Lorsque cette fonctionnalité est utilisée, un identifiant de version des métadonnées est inséré dans les métadonnées de l'image I afin de permettre au terminal T1 de demander au serveur SCC la dernière version des métadonnées associées à l'image I avant de décider ou non de télécharger une nouvelle fois une page HTML envoyée par le serveur SCC.

En variante dans cette étape E4, au lieu d'utiliser une page HTML pour envoyer l'image I et faire afficher au terminal T1 les zones actives de l'image I et des informations associées à ces zones, le module de gestion MCC utilise un fichier au format d'extension ".swf" encore appelé fichier d'animation "Flash" comportant l'image I. Ces deux implémentations utilisant HTML ou Flash ne nécessitent pas de module de lecture VCC spécifique au niveau du terminal T1. Une autre implémentation possible, dans laquelle le module de gestion MCC utilise un fichier XML pour envoyer l'image I et faire afficher au terminal T1 les zones actives de l'image I et des informations associées à ces zones, nécessite un module de lecture VCC spécifique car la grammaire DTD (d'après l'anglais "Document Type Definition") associée à ce fichier XML est alors propriétaire.

L'étape E5 est le positionnement par l'utilisateur d'un marqueur M, représenté à la **figure 3****,** sur la zone active ZA de l'image I. Cette action de l'utilisateur provoque l'exécution d'une portion de code par le module de lecture VCC dans le terminal T1, qui affiche, suite à cette exécution, le contour de la zone active ZA, et détermine des informations à afficher dans une bulle graphique. Ces informations sont celles contenues dans la portion de code exécutée, à savoir les liens actifs permettant d'appeler le contact associé à la zone ZA ou de lui envoyer un message, ainsi que des informations liées au contact représenté sur la zone ZA, dont un identifiant. Le module de lecture VCC utilise cet identifiant pour déterminer d'autres informations à afficher, contenues dans le carnet d'adresses RT local du terminal T1, ou dans un historique des appels de l'utilisateur par exemple. Ainsi ces informations supplémentaires sont par exemple une note de l'utilisateur associée à ce contact et la date de son dernier appel vers ce contact.

L'étape E6 est l'affichage des liens actifs et des informations déterminées à l'étape E5, dans une bulle graphique attachée à la zone active ZA. Il est à noter qu'en fonction du choix des informations à afficher effectué à l'étape E4 par le module de gestion MCC, seul un lien actif est éventuellement affiché à l'étape E6, par exemple si le contact a indiqué dans ses préférences ne vouloir être contacté que par courrier électronique.

L'étape E7 est l'activation de la zone active ZA par appui de l'utilisateur sur le lien actif permettant d'appeler le contact, ou sur le bouton d'action permettant d'envoyer un texte déterminé par l'utilisateur, au contact. En variante, d'autres actions de l'utilisateur permettent d'activer une zone active d'une image téléchargée selon l'invention, par exemple un simple clic sur cette zone dans le cas où le contact qui y est représenté n'est joignable que par appel téléphonique.

L'étape E8 est la transmission d'un message d'activation par le module de lecture VCC au serveur distant SCC, résultat de l'exécution d'une autre portion de code par le module de lecture VCC suite à l'activation de la zone ZA par l'utilisateur à l'étape E7. Ce message d'activation comporte l'identifiant du contact associé à la zone active ZA, précédemment déterminé à l'étape E5 par le module de lecture VCC, ainsi que:
- un texte déterminé par l'utilisateur si à l'étape E7 l'utilisateur a cliqué sur le bouton d'action pour envoyer un message au contact,
- ou, dans le cas où l'utilisateur a cliqué sur le lien actif permettant d'appeler le contact à l'étape E7, un numéro de téléphone ou une adresse SIP (d'après l'anglais "Session Initiation Protocol") de l'utilisateur, que le module de lecture VCC a lu dans le fichier de configuration FC.

A la fin de l'étape E8, le message d'activation envoyé par le module de lecture VCC du terminal T1 est transmis au module de gestion MCC du serveur SCC en utilisant l'interface de programmation API. Le module de gestion MCC met alors en oeuvre le procédé de transmission de données selon l'invention suivant des étapes E9 à E11 représentées à la **figure 5****.**

L'étape E9 est la réception par le module de gestion MCC du message d'activation envoyé par le terminal T1. Ce message d'activation contient, comme décrit en relation avec l'étape E8 du procédé de communication selon l'invention, un identifiant de contact, ainsi qu'un texte à envoyer au contact ou bien une adresse de communication permettant de joindre l'utilisateur, tel qu'un numéro de téléphone ou une adresse SIP.

L'étape suivante E10 est l'obtention d'une adresse de communication du contact associé à la zone active ZA par le module de gestion MCC. Dans le cas où l'identifiant de contact contenu dans le message d'activation reçu à l'étape E9 est une adresse de communication du contact, le module de gestion MCC obtient cette adresse simplement en lisant ce message d'activation. Dans le cas contraire, le module de gestion MCC utilise l'identifiant de contact contenu dans le message d'activation reçu à l'étape E9 pour déterminer, grâce à la base de données EN1 de carnets d'adresses en ligne, aux données du serveur SRS ou aux métadonnées interprétées à l'étape E4, une adresse de communication de ce contact. Si en variante de réalisation de l'invention, l'identifiant de contact contenu dans le message d'activation est un pseudonyme permettant de préserver l'anonymat du contact sur le serveur SRS, alors le module de gestion MCC utilise un serveur SAL de pseudonymes et représenté à la **figure 3****.** Ce serveur permet au module de gestion MCC d'obtenir à partir de ce pseudonyme, une adresse de communication du contact, ou un autre identifiant permettant d'obtenir une telle adresse de communication.

Enfin l'étape E11 est l'établissement d'une session de communication entre l'utilisateur et le contact, ou l'envoi d'un message au contact. Deux cas sont à distinguer:
- Si à l'étape E9 le message d'activation reçu comporte un texte à envoyer au contact, alors dans cette étape E11 le module de gestion MCC envoie ce texte ainsi que l'adresse de communication obtenue à l'étape E10 au serveur de messagerie EN4. Ce serveur de messagerie est par exemple un serveur de messagerie électronique, ou un serveur de messages SMS (d'après l'anglais "Short Message Service", ou encore un serveur de message MMS (d'après l'anglais "Multimedia Message Service"), ayant une interface de programmation de type OSA (d'après l'anglais "Open Service Access") ou OMA (d'après l'anglais "Open Mobile Alliance"). Le serveur de messagerie EN4 envoie alors un message SMS, MMS ou électronique comportant ce texte à l'adresse de communication communiquée par le module de gestion MCC.
- Si à l'étape E9 le message d'activation reçu comporte une adresse de communication permettant de joindre l'utilisateur, alors dans cette étape E11 le module de gestion MCC utilise le serveur EN3 de contrôle d'appel pour établir un appel entre le terminal T1 de l'utilisateur et un terminal T2 du contact, correspondant à l'adresse de communication obtenue à l'étape E10. Le serveur de contrôle d'appel EN3 est par exemple un serveur d'application SIP, ou un serveur de réseau intelligent, comportant une interface de programmation de type "OSA Multi Party Call Control". Plus précisément le module de gestion utilise par exemple la méthode "createCall" d'établissement d'appel de cette interface de programmation, avec pour paramètres les adresses de communication de l'utilisateur et du contact. Le serveur de contrôle d'appel EN3 établit alors une session de communication entre le terminal T1 et le terminal T2.

Il est à noter que de nombreuses variantes de réalisation de ce mode de réalisation de l'invention sont envisageables. Notamment lorsque le contact que souhaite joindre l'utilisateur n'a requis aucune confidentialité de son ou ses adresses de communication, une de celles-ci est par exemple communiquée à l'étape E4 au terminal T1 de l'utilisateur, dans la page HTML contenant l'image I. Dans cette variante il est préférable d'implémenter le procédé de transmission de données selon l'invention dans le terminal T1 de l'utilisateur, pour accélérer un établissement de session de données entre l'utilisateur et son contact. De plus dans ce mode de réalisation de l'invention, il est donné la possibilité à l'utilisateur d'envoyer un texte à un contact sur l'image I, mais en variante il lui est permis d'envoyer à ce contact tout type de contenu multimédia, tel qu'une vidéo par exemple.

## Revendications

1. Procédé de communication incluant une étape de chargement (E4) d'une image (I) dans un terminal (T1), les données de ladite image étant codées dans un fichier de données, procédé **caractérisé en ce que** ladite image comporte au moins une zone active, ledit fichier de données comportant des métadonnées, lesdites métadonnées comportant pour ladite zone active de ladite image, une description géométrique de ladite zone active et un identifiant d'un contact, et **en ce que** ledit procédé comporte au moins :
- une étape d'activation (E7) de ladite zone active (ZA),
- et une étape de transmission (E8) d'un message d'activation déclenchant une transmission de données vers un équipement défini par une adresse de communication déterminée de manière distante après interprétation par un serveur distant (SCC) desdites métadonnées associées à ladite zone active (ZA).

2. Procédé de communication selon la revendication 1, dans lequel ladite étape d'activation (E7) est précédée d'une étape (E6) d'affichage d'informations associées à ladite zone active (ZA).

3. Procédé de communication selon la revendication 2, dans lequel lesdites informations comportent un choix d'activations possibles de ladite zone active (ZA), ledit choix comportant une activation provoquant un envoi de message par ledit serveur distant (SCC) et une activation provoquant un établissement de session de communication par ledit serveur distant (SCC).

4. Procédé de transmission de données entre un premier terminal (T1) et un deuxième terminal (T2) dans un réseau de communication (RES), **caractérisé en ce qu'**il comprend des étapes de:
- interprétation de métadonnées associées à au moins une zone active (ZA) d'une image numérique (I), les données de ladite image étant codées dans un fichier de données comportant des métadonnées, lesdites métadonnées comportant pour ladite zone active, une description géométrique de ladite zone active et un identifiant d'un contact,
- réception (E9) d'un message d'activation de ladite zone active (ZA), ledit message étant envoyé par ledit premier terminal (T1),
- obtention (E10) d'une adresse de communication associée à ladite zone active (ZA), en utilisant ledit identifiant de contact,
- établissement (E11) d'une session de communication entre ledit premier terminal (T1) et ledit deuxième terminal (T2), ou envoi d'un message audit deuxième terminal (T2), en utilisant ladite adresse de communication.

5. Terminal (T1) comportant des moyens de chargement d'une image numérique (I), **caractérisé en ce qu'**il comporte en outre:
- des moyens (VCC) de visualisation d'une zone active (ZA) de ladite image numérique (I), les données de ladite image étant codées dans un fichier de données comportant des métadonnées, lesdites métadonnées comportant pour ladite zone active, une description géométrique de ladite zone active et un identifiant d'un contact,
- des moyens d'activation de ladite zone active (ZA) suite à une action d'un utilisateur,
- des moyens de transmission d'un message d'activation à un serveur distant (SCC) comportant des moyens (MDP) d'interprétation desdites métadonnées associées à ladite zone active (ZA), et des moyens d'obtention d'une adresse de communication à partir de métadonnées ainsi interprétées.

6. Programme d'ordinateur comportant des instructions pour mettre en oeuvre le procédé selon l'une quelconque des revendications 1 à 3, lorsqu'il est exécuté sur un processeur.

## Claims

1. Method of communication including a step (E4) of loading an image (I) into a terminal (I1), the data of the said image being coded in a data file, method **characterized in that** the said image comprises at least one active zone, the said data file comprising metadata, the said metadata comprising for the said active zone of the said image, a geometric description of the said active zone and an identifier of a contact, and **in that** the said method comprises at least:
- a step (E7) of activating the said active zone (ZA),
- and a step (E8) of transmitting an activation message triggering a transmission of data to an item of equipment defined by a communication address determined in a remote manner after interpretation by a remote server (SCC) of the said metadata associated with the said active zone (ZA).

2. Method of communication according to Claim 1, in which the said activating step (E7) is preceded by a step (E6) of displaying information associated with the said active zone (ZA).

3. Method of communication according to Claim 2, in which the said information comprises a choice of possible activations of the said active zone (ZA), the said choice comprising an activation causing dispatch of a message by the said remote server (SCC) and an activation causing establishment of a communication session by the said remote server (SCC).

4. Method for transmitting data between a first terminal (T1) and a second terminal (T2) in a communication network (RES), **characterized in that** it comprises steps of:
- interpreting metadata associated with at least one active zone (ZA) of a digital image (I), the data of the said image being coded in a data file comprising metadata, the said metadata comprising for the said active zone, a geometric description of the said active zone and an identifier of a contact,
- receiving (E9) a message for activating the said active zone (ZA), the said message being dispatched by the said first terminal (T1),
- obtaining (E10) a communication address associated with the said active zone (ZA), by using the said contact identifier,
- establishing (E11) a communication session between the said first terminal (T1) and the said second terminal (T2), or dispatching a message to the said second terminal (T2), using the said communication address.

5. Terminal (T1) comprising means for loading a digital image (I), **characterized in that** it furthermore comprises:
- means (VCC) for viewing an active zone (ZA) of the said digital image (I), the data of the said image being coded in a data file comprising metadata, the said metadata comprising for the said active zone, a geometric description of the said active zone and an identifier of a contact,
- means for activating the said active zone (ZA) subsequent to an action of a user,
- means for transmitting an activation message to a remote server (SCC) comprising means (MDP) for interpreting the said metadata associated with the said active zone (ZA), and means for obtaining a communication address on the basis of metadata thus interpreted.

6. Computer program comprising instructions for implementing the method according to any one of Claims 1 to 3, when it is executed on a processor.

## Patentansprüche

1. Kommunikationsverfahren, das einen Schritt des Ladens (E4) eines Bilds (I) in ein Endgerät (T1) enthält, wobei die Daten des Bilds in einer Datei codiert sind, Verfahren, das **dadurch gekennzeichnet ist, dass** das Bild mindestens eine aktive Zone aufweist, wobei die Datei Metadaten aufweist, wobei die Metadaten für die aktive Zone des Bilds eine geometrische Beschreibung der aktiven Zone und eine Kennung eines Kontakts aufweisen, und dass das Verfahren mindestens aufweist:
- einen Aktivierungsschritt (E7) der aktiven Zone (ZA),
- und einen Übertragungsschritt (E8) einer Aktivierungsmitteilung, die eine Datenübertragung zu einer Ausrüstung auslöst, die durch eine Kommunikationsadresse definiert wird, die nach Interpretation durch einen fernen Server (SCC) der der aktiven Zone (ZA) zugeordneten Metadaten fern bestimmt wird.

2. Kommunikationsverfahren nach Anspruch 1, bei dem vor dem Aktivierungsschritt (E7) ein Schritt (E6) der Anzeige von der aktiven Zone (ZA) zugeordneten Informationen liegt.

3. Kommunikationsverfahren nach Anspruch 2, bei dem die Informationen eine Wahl möglicher Aktivierungen der aktiven Zone (ZA) aufweisen, wobei die Wahl eine Aktivierung, die ein Senden einer Mitteilung durch den fernen Server (SCC) bewirkt, und eine Aktivierung aufweist, die einen Kommunikationssitzungsaufbau durch den fernen Server (SCC) bewirkt.

4. Verfahren zur Datenübertragung zwischen einem ersten Endgerät (T1) und einem zweiten Endgerät (T2) in einem Kommunikationsnetz (RES), **dadurch gekennzeichnet, dass** es folgende Schritte enthält:
- Interpretation von mindestens einer aktiven Zone (ZA) eines digitalen Bilds (I) zugeordneten Metadaten, wobei die Daten des Bilds in einer Metadaten enthaltenden Datei codiert sind, wobei die Metadaten für die aktive Zone eine geometrische Beschreibung der aktiven Zone und eine Kennung eines Kontakts aufweisen,
- Empfang (E9) einer Aktivierungsmitteilung der aktiven Zone (ZA), wobei die Mitteilung vom ersten Endgerät (T1) geschickt wird,
- Erhalt (E10) einer der aktiven Zone (ZA) zugeordneten Kommunikationsadresse unter Verwendung der Kontaktkennung,
- Aufbau (E11) einer Kommunikationssitzung zwischen dem ersten Endgerät (T1) und dem zweiten Endgerät (T2), oder Schicken einer Mitteilung an das zweite Endgerät (T2) unter Verwendung der Kommunikationsadresse.

5. Endgerät (T1), das Einrichtungen zum Laden eines digitalen Bilds (I) aufweist, **dadurch gekennzeichnet, dass** es außerdem aufweist:
- Einrichtungen (VCC) zur Sichtbarmachung einer aktiven Zone (ZA) des digitalen Bilds (I), wobei die Daten des Bilds in einer Metadaten aufweisenden Datei codiert sind, wobei die Metadaten für die aktive Zone eine geometrische Beschreibung der aktiven Zone und eine Kennung eines Kontakts aufweisen,
- Einrichtungen zur Aktivierung der aktiven Zone (ZA) nach einer Aktion eines Benutzers,
- Einrichtungen zur Übertragung einer Aktivierungsmitteilung an einen fernen Server (SCC), der Einrichtungen (MDP) zur Interpretation der der aktiven Zone (ZA) zugeordneten Metadaten und Einrichtungen zum Erhalt einer Kommunikationsadresse ausgehend von so interpretierten Metadaten aufweist.

6. Computerprogramm, das Anweisungen zur Durchführung des Verfahrens nach den Ansprüchen 1 bis 3 aufweist, wenn es auf einem Prozessor ausgeführt wird.
